# EUROPÄISCHE PATENTSCHRIFT

(11) **EP 2 078 870 B1**
(45) Veröffentlichungstag und Bekanntmachung des Hinweises auf die Patenterteilung: **14.10.2015**
(21) Anmeldenummer: 09150112.2
(22) Anmeldetag: 06.01.2009
(51) Int. Cl.: F16B 11/00

(54) **Verfahren zum Verbinden von Bauteilen, insbesondere Fahrzeugachskomponenten**
Method for connecting components, particularly vehicle axle components
Procédé destiné à lier des composants, notamment des composants d'axe de véhicule

(30) Priorität: 09.01.2008 DE 102008003552
(43) Veröffentlichungstag der Anmeldung: 15.07.2009
(73) Patentinhaber: Benteler Automobiltechnik GmbH, 33102 Paderborn (DE)
(72) Erfinder: Wibbeke, Michael, 33102, Paderborn (DE); Krogmeier, Jürgen, 33161, Hövelhof (DE)
(74) Vertreter: Dantz, Jan Henning

(56) Entgegenhaltungen:
- EP-A1- 1 805 045
- DE-B- 1 252 975

## Beschreibung

Die Erfindung betrifft ein Verfahren nach dem Oberbegriff des Anspruchs 1.

Achskomponenten für Fahrzeuge, insbesondere an Hilfsrahmen, werden häufig als Leichtbaustrukturen ausgeführt. Dabei kommen vermehrt Mischbauweisen, zum Beispiel aus Stahl und Aluminium, zum Einsatz. Zum Zusammenfügen der unterschiedlichen Werkstoffe werden hierbei derzeit Niet- oder Schraubtechnologien benutzt. Thermische Fügeverfahren, wie beispielsweise MIG-Schweißen, scheiden aufgrund der vergleichsweise stark differierenden Schmelzpunkte der unterschiedlichen Materialien aus.

Eine geeignete Fügetechnologie zur Verbesserung von Verbindungsfestigkeiten aufgrund der flächigen Kraftübertragung stellt das Kleben mit hochfesten Strukturklebstoffen dar, die in einem KTL-Trocknungsprozess, zum Beispiel bei 180°C/20min, aushärten.

Zur Erzielung von ausreichenden Eigenschaftsprofilen, insbesondere Festigkeit, ist die Ausbildung einer definierten und homogenen Klebschichtdicke von zentraler Bedeutung. Bisher bekannte Lösungswege verfolgen die Möglichkeit, Partikel, zum Beispiel Glasperlen, den Klebstoffen beizumischen bzw. so genannten Abstandsnasen an die Komponenten, die aus Guss hergestellt werden, anzugießen.

Die EP 1 036 680 B1 beschreibt Klebeverbindungen von Achskomponenten einer Verbundlenkerachse für Kraftfahrzeuge, bei welcher zwei durch einen Querträger verbundene Längslenker klebetechnisch gefügt sind. Dabei ist zwischen den Enden des Querträgers und jeweiligen Aufnahmen der Längsträger ein mit Klebstoff befüllbarer Ringspalt ausgebildet.

Die EP 1 805 045 A1 beschreibt Klebeverbindungen von Achskomponenten einer Kraftfahrzeugachse, bei welcher zwei durch einen Querträger verbundene Längslenker klebetechnisch gefügt sind. Dabei sind die Enden des Querträgers und des Längsträger mit einer Klebstoffschicht beaufschlagt. Dabei variiert die Materialdicke der Enden der Längsträger in Längsrichtung der Längsträger.

Ein Problem der eingangs genannten Konzepte besteht darin, dass eine unkontrollierte Verdrängung des Klebstoffs aus dem Bereich von punktuellen Verbindungen bzw. Bereichen plastischer Verformung eine Veränderung der Klebschichtdicke mit sich bringen kann.

Bei einer Lösung mit angegossenen Abstandsnasen ist die Variantenvielfalt, zum Beispiel bei einer Variation der Klebschichtdicke, stark eingeschränkt. Die üblichen einzusetzenden Klebstoffsysteme für den Bereich Fahrwerkskomponenten benötigen in Abhängigkeit vom Klebstoffsystem eine Klebschichtdicke von 0,2 bis 1,5 mm. Diese Klebeschichtdicke wird auch bei der Erfindung bevorzugt

Weiterhin ergeben sich bei Lösungen mit punktuellen Niet- bzw. Schraubverbindungen Nachteile in Hinsicht auf eine nicht ebene Auflage des Niet- bzw. Schraubenkopfes auf der außen liegenden Bauteilkomponente. Dies kann sich negativ auf die Gesamtverbindungsfestigkeit auswirken. Außerdem können überstehende Kopfbereiche so genannte Pakageprobleme bilden.

Zum Stand der Technik werden die DE 198 31 982 C2, die DE 197 37 966 A1, die DE 195 39 685 A1, die DE 38 11 427 A1, die DE 12 52 975B, die US 5 019 196 A, die US 3 298 271 A und die US 3 192 671 A genannt.

Der Erfindung liegt vor diesem Hintergrund die Aufgabe zugrunde, ein vereinfachtes Verfahren zum Verbinden von Bauteilen insbesondere in Hybridbauweise zu schaffen, mit dem die Klebeschichtdicke einfach variiert und konstant gehatten werden kann.

Diese Aufgabe wird mit den Merkmalen des Anspruchs 1 gelöst.

Die Erfindung schafft ein Verfahren zum klebenden Verbinden eines ersten Bauteils, vorzugsweise aus Metall, mit einem zweiten Bauteil, vorzugsweise aus Metall, insbesondere ein Verfahren zum klebenden Verbinden eines metallischen Gussknotens aus Metall mit einem diesen abschnittsweise einfassenden Profilbauteil wie einem Rohr aus Metall, bei dem wenigstens eines der Bauteile mit Abstandslaschen versehen wird und bei dem die beiden miteinander zu verklebenden Bauteile beim oder vor dem Verkleben im Bereich der Abstandslaschen fügend miteinander verbunden werden und derart in einem definierten Abstand zueinander fixiert werden.

Erfindungsgemäß wird ein Kleben in besonders vorteilhafter Weise mit einem punktuellen bzw. bereichsweisen mechanischen Fügeverfahren kombiniert, wobei eine konstante homogene Klebschichtdicke durch am Umfang von einem der miteinander zu verbindenden Profilbauteile angeordnete Abstandslaschen festlegbar ist.

Die ergänzende punktuelle fügende Verbindung mit Fügelementen fixiert die Bauteile beim Klebevorgang relativ zueinander besonders sicher.

Gegenüber dem Stand der Technik werden derart höhere Festigkeiten der Profilbauteilverbindung erreicht, wobei Pakageprobleme minimiert werden.

Vorzugsweise werden die Abstandslaschen umformend ausgebildet.

Besonders bevorzugt wird ferner mit den Abstandslaschen ein Ringspalt zwischen den miteinander zu verklebenden Bauteilen eingestellt, in den der Klebstoff eingebracht wird.

Die Abstandslaschen sind einfach einbringbar und ermöglichen ferner auch in einfacher Weise eine Variation der Klebeschichtdicke. Zudem wird die Klebeschichtdicke durch sie auf einfache Weise konstant gehalten.

Die Abstandslaschen des zweiten Profilbauteils werden vorzugsweise durch ein Umformverfahren in das zweite Profilbauteil eingebracht. Ein großer Vorteil gegenüber einer gusstechnischen Anbringung von Abstandsnasen besteht in der einfachen Möglichkeit dazu, durch Variation der Tiefe der Abstandslaschen auch die Klebschichtdicke besonders einfach durch Austausch oder Änderung des entsprechenden Werkzeugs zu variieren bzw. voreinzustellen.

Des Weiteren ist es möglich, verschiedene Vorspannungen zwischen den beiden Fügepartnern sowie auch Spielpassungen oder Übergangspassungen darzustellen.

Dabei ist es einerseits denkbar, dass nur das zweite Bauteil im Bereich der Abstandslaschen mit Öffnungen versehen wird und dann punktuell fügend mit dem ersten Bauteil verbunden wird. Andererseits können das erste und das zweite Bauteil im Bereich der Abstandslaschen mit miteinander fluchtenden Öffnungen versehen und dann punktuell fügend miteinander verbunden werden.

Die Erfindung wird nachfolgend unter Bezug auf die Zeichnungen anhand besonders bevorzugter Ausführungsformen beispielhaft erläutert. Es zeigen:
- Figur 1: eine schematische perspektivische Ansicht von Abschnitten von zwei miteinander erfindungsgemäß verbundenen Bauteilen;
- Figur 2: eine Schnittansicht der ersten Ausführung nach Figur 1;
- Figur 3: eine Teilschnittansicht eines ersten Werkzeugs;
- Figur 4: eine weitere um 90° gedrehte Schnittansicht des Werkzeugs aus Fig. 3 mit einem darauf angeordneten Bauteil und mit Prägestempeln mit integrierten Stanzen;
- Figur 5: eine Teilschnittansicht des Werkzeugs aus Fig. 4 mit einem Prägestempel und dem zweiten Bauteil vor einem Prägevorgang, wenn nur das äußere Bauteil vorgelocht werden muß;
- Figur 6: eine Teilschnittansicht der Anordnung aus Figur 5 nach einem Prägevorgang, wenn nur das äußere Bauteil vorgelocht werden muß;
- Figur 7: eine Teilschnittansicht eines zweiten Werkzeugs mit dem ersten und zweiten Bauteil und einem Prägestempel vor einem Stanzen, wenn beide Bauteile vorgelocht werden müssen; und
- Figur 8: eine Teilschnittansicht der Anordnung aus Figur 7 während eines Stanzvorganges, wenn beide Bauteile vorgelocht werden müssen.

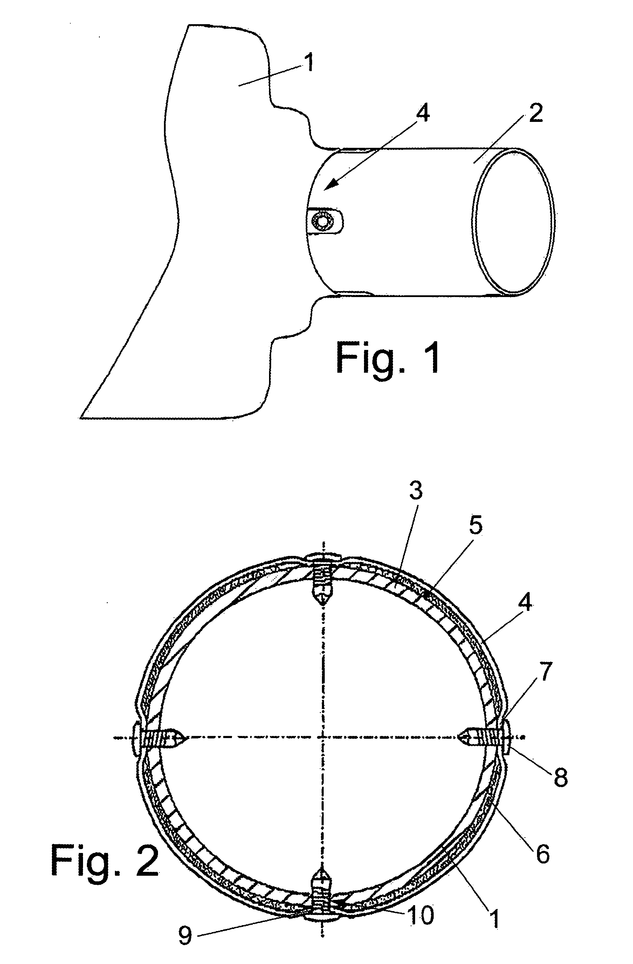

Figur 1 zeigt zwei mittels eines Hybridklebeverfahren miteinander verbundenen Bauteile 1, 2.

In diesem Beispiel ist das erste Bauteil 1 als ein so genanntes Knotenbauteil und das zweite Bauteil 2 als Profilbauteil, insbesondere als ein umfangsgeschlossenes Rohr ausgebildet. Anstelle eines Rohres kann als das zweite Profilbauteil 2 auch ein nicht umfangsgeschlossenes Profil verwendet werden. Vorzugsweise bestehen beide der Bauteile 1, 2 aus Metall. Dabei wird das Verfahren ganz besonders dazu verwendet, Gussknoten 1 aus Leichtmetall oder Stahl mit Profilbauteilen wie Rohren 2 aus Leichtmetall oder Stahl zu verbinden. Der bevorzugte Einsatzfall ist die Verbindung von Aluminium- oder Magnesiumgussknoten mit Rohren 2 aus Stahl.

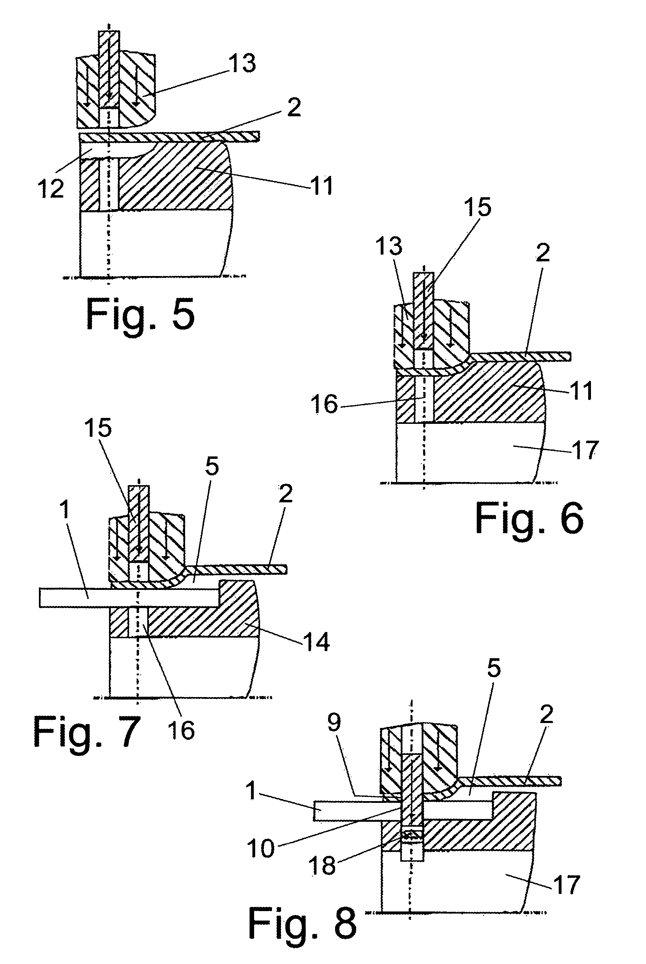

Das erste Bauteil 1 weist einen Verbindungsabschnitt 3 - siehe auch Fig. 2 und Fig. 3 - 8 - mit einem hier kreisförmigen Querschnitt auf, welcher derart ausgelegt ist, dass das erste Bauteil 1 mit dem Verbindungsabschnitt 3 in das korrespondierende freie Ende 4 des Profilbauteils 2 einschiebbar ist.

Zwischen den beiden Bauteilen 1, 2 ist im einander überlappenden Bereich ein Ringspalt 5 ausgebildet, der mit Klebstoff 6 gefüllt ist, welcher das erste Bauteil 1 mit dem Profilbauteil 2 klebend verbindet.

Dabei sind in das äußere Profilbauteil 2 eine oder hier mehrere - hier vier - Abstandslaschen 7 umformend eingebracht, insbesondere eingeprägt, die sich radial nach innen hin erstrecken und deren Tiefe der Dicke des Ringspaltes 5 entspricht bzw. welche dessen Dicke vorgeben. Werden wenigstens drei derartige Abstandslaschen 7 umfangsverteilt in das äußere Profilbauteil eingebracht, ist das äußere Profilbauteil 2 in einem definierten Abstand zum inneren Bauteil 1 gehalten, was sich vorteilhaft auf die Verklebung auswirkt, die besonders gut ausfällt, wenn sie über ihren Umfang eine konstante Dicke aufweist.

Dabei ist ferner vorgesehen, die beiden Bauteile 1, 2 punktuell fügend, insbesondere mittels Fügelementen, wie Schrauben 8 oder Nieten miteinander fügend zu verbinden.

Die Fügelemente 8 durchsetzen vorzugsweise miteinander fluchtende Öffnungen 9, 10 in den Abstandslaschen 7 des zweiten Bauteils 2 und des ersten Bauteils 1.

Die vorstehend beschriebene, aus den zwei Bauteilen 1, 2, zusammengesetzte Anordnung aus den zwei miteinander klebend und punktuell fügend miteinander verbundenen Bauteilen 1, 2 wird wie folgt hergestellt:

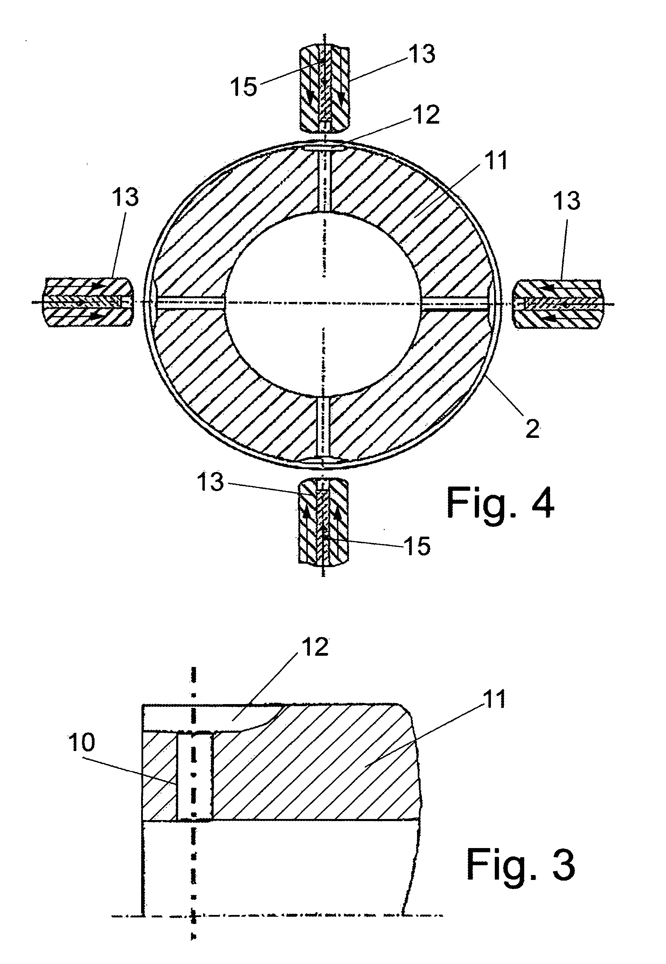

Das Profilteil 2 wird mit seinem einen Ende auf ein erstes Werkzeug 11 aufgeschoben, das Vertiefungen 12 aufweist, an deren Stelle mit wenigstens einem oder mehreren Prägestempel (n) 13 - hier durch eine Bewegung radial nach innen hin - die Abstandslaschen 6 eingeprägt werden (Fig. 4, 5, 6).

Nach einer ersten Variante wird sodann das erste Bauteil bevorzugt von einer Stanze oder einem Bohrwerkzeug im Bereich der Abstandslaschen mit den Öffnungen 9 versehen (hier nicht dargestellt). Hier ist ein Stanzstempel 15 vorteilhaft in den Prägestempel 13 integriert. Anstelle einer Stanze könnte auch eine Bohrvorrichtung zum Einbringen der Öffnungen verwendet werden.

Sodann wird das Profilteil 2 von dem ersten Werkzeug 11 getrennt und auf ein zweites Werkzeug 14 aufgesetzt, auf das vorab das korrespondierende freie Ende und vorzugsweise mit Klebstoff versehene erste Bauteil 1 aufgesetzt wurde. Sodann bietet es sich an, durch die Öffnungen 9 hindurch beispielsweise selbstschneidende Schrauben in das erste Bauteil 1 zu drehen und die Bauteile 1, 2 derart relativ zueinander punktuell fügend zu fixieren.

Es ist nach einer zweiten Variante des Verfahrens aber auch denkbar, das erste Bauteil auf dem ersten Werkzeug 11 noch nicht zu lochen sondern es direkt nach dem Einprägen der Abstandslaschen 6 auf das zweite Werkzeug 14 aufzusetzen bzw. das Werkzeug zu tauschen und sodann das erste und das zweite Bauteil 1, 2

bevorzugt von dem Stanzstempel 15 der einem Bohrwerkzeug im Bereich der Abstandslaschen in einem Arbeitsgang gemeinsam mit den Öffnungen 9, 10 zu versehen. Auch hierzu ist der in den Prägestempel 13 integrierte Stanzstempel 15 nutzbar. Anstelle einer Stanze könnte aber auch hier auch eine Bohrvorrichtung zum Einbringen der Öffnungen verwendet werden.

Das Werkzeug 11 und das Werkzeug 14 weisen vorzugsweise entsprechende Öffnungen 16 auf, in welche der Stanzstempel 15 eintauchen kann. Ausgestochene Materialbutzen 18 können durch eine zentrische Öffnung 17 des Werkzeugs 11 oder 14 abgeführt werden.

Die so in Verbindungsposition positionierten und gestanzten Öffnungen 9, 10 dienen zur Aufnahme der Fügeelemente 8.

Das Aufbringen von Klebstoff 6 kann vorab auf das Bauteil 1 oder nach dem Fügen injizierend in den Ringspalt 5 erfolgen.

Die Arretierung der so mechanisch gefügten Profilbauteile 1, 2 bietet eine Handhabungsfreiheit für die so verbundenen Teile, bis der Klebstoff gehärtet bzw. eingebracht und gehärtet ist.

Die Querschnittsformen der Verbindungsstelle können außer der oben kreisrunden Form zum Beispiel auch anders rund, mehreckig, rechteckig, quadratisch, oval sein. Bei kreisrunden Verbindungen ist die Erfindung aber besonders vorteilhaft.

### Bezugszeichen

- Bauteile: 1, 2
- Verbindungsabschnitt: 3
- freies Ende: 4
- Ringspalt: 5
- Klebstoff: 6
- Abstandslaschen: 7
- Fügelemente: 8
- Öffnungen: 9, 10
- erstes Werkzeug: 11
- Vertiefungen: 12
- Prägestempel: 13
- zweites Werkzeug: 14
- Stanzstempel: 15
- Öffnungen: 16
- zentrische Öffnung: 17
- Materialbutzen: 18

## Patentansprüche

1. Verfahren zum klebenden Verbinden eines ersten Bauteils (1) aus Metall, mit einem zweiten Bauteil (2), einem Profilbauteil (2), aus Metall, wobei das erste Bauteil ein metallischer Gussknoten (1) aus Metall ist und das zweite Bauteil ein dieses Bauteil abschnittsweise einfassendes Rohr (2) aus Metall, **dadurch gekennzeichnet, dass** wenigstens eines der Bauteile (1, 2) mit Abstandslaschen (7) versehen wird und dass die beiden miteinander zu verklebenden Bauteile (1, 2) beim oder vor dem Verkleben im Bereich der Abstandslaschen (7) fügend miteinander verbunden werden und derart in einem definierten Abstand zueinander fixiert werden.

2. Verfahren nach Anspruch 1, **dadurch gekennzeichnet, dass** die beiden miteinander zu verklebenden Bauteile (1, 2) beim oder vor dem Verkleben im Bereich der Abstandslaschen (7) punktuell fügend miteinander verbunden werden.

3. Verfahren nach Anspruch 1 oder 2, **dadurch gekennzeichnet, dass** die Abstandslaschen (7) umformend ausgebildet werden.

4. Verfahren nach Anspruch 1, 2 oder 3, **dadurch gekennzeichnet, dass** mit den Abstandslaschen (7) ein Ringspalt (5) zwischen den miteinander zu verklebenden Bauteilen (1, 2) eingestellt wird, in den der Klebstoff (6) eingebracht ist oder wird.

5. Verfahren nach Anspruch 4, **dadurch gekennzeichnet, dass** das zweite Bauteil, insbesondere das Profilbauteil (2), mit einem seiner Enden auf ein erstes Werkzeug (11) aufgebracht wird, das Vertiefungen (12) aufweist, in deren Bereich mit wenigstens einem oder mehreren Prägestempel(n) (13) die Abstandslaschen (7) eingeprägt werden.

6. Verfahren nach einem der vorstehenden Ansprüche, **dadurch gekennzeichnet, dass** nur das zweite Bauteil (2) im Bereich der Abstandslaschen (7) mit Öffnungen (9) versehen wird und dann punktuell fügend mit dem ersten Bauteil (1) verbunden wird.

7. Verfahren nach einem der vorstehenden Ansprüche, **dadurch gekennzeichnet, dass** das erste und das zweite Bauteil (2, 3) im Bereich der Abstandslaschen (7) mit miteinander fluchtenden Öffnungen (9, 10) versehen werden und dann punktuell fügend miteinander verbunden werden.

8. Verfahren nach Anspruch 7, **dadurch gekennzeichnet, dass** das zweite Bauteil (2) und das erste Bauteil (1) in einem Arbeitsgang mit den Öffnungen (9, 10) versehen werden.

9. Verfahren nach Anspruch 8, **dadurch gekennzeichnet, dass** das Profilbauteil (2) und das erste Bauteil (1) auf dem zweiten Werkzeug in einem einzigen stanzenden oder bohrenden Arbeitsgang mit den miteinander fluchtenden Öffnungen (9, 10) versehen werden.

10. Verfahren nach einem der vorstehenden Ansprüche, **dadurch gekennzeichnet, dass** als die Fügelemente Schraub- (8) oder Nietelemente verwendet werden.

11. Verfahren nach einem der vorstehenden Ansprüche, **dadurch gekennzeichnet, dass** als die beiden Bauteile (1, 2) solche aus unterschiedlichen Metallen verwendet werden.

12. Verfahren nach Anspruch 11, **dadurch gekennzeichnet, dass** das eine der miteinander zu verklebenden Bauteile (1) aus Leichtmetall oder einer Leichtmetalllegierung und das andere der Bauteile (2) aus Stahl besteht.

13. Verfahren nach Anspruch 11, **dadurch gekennzeichnet, dass** die beiden miteinander zu verklebenden Bauteile (1, 2) aus Leichtmetall oder aus Stahl bestehen.

## Claims

1. A method for connecting by gluing a first component (1) made of metal to a second component (2), i.e. a profile component (2), made of metal, wherein the first component is a metallic casting node (1) made of metal and the second component is a tube (2) made of metal which encompasses said first component, **characterized in that** at least one of the components (1, 2) is provided with spacer lugs (7), and the two components (1, 2) to be glued together are connected to each other in adjoining fashion during or before the gluing in the region of the spacer lugs (7) and are thus fixed at a defined distance with respect to each other.

2. A method according to claim 1, **characterized in that** the two components (1, 2) to be glued together are connected to each other during or before the gluing by point-to-point joining in the region of the spacer lugs (7).

3. A method according to claim 1 or 2, **characterized in that** the spacer lugs (7) are formed to be transformative.

4. A method according to claim 1, 2 or 3, **characterized in that** an annular gap (5) between the components (1, 2) to be glued together is set with the spacer lugs (7), into which the adhesive (6) is or will be introduced.

5. A method according to claim 4, **characterized in that** the second component, especially the profile component (2), is applied with one of its ends to a first tool (11) having depressions (12), in the region of which the spacer lugs (7) are embossed by means of at least one or several embossing stamp(s) (13).

6. A method according to one of the preceding claims, **characterized in that** only the second component (2) is provided with openings (9) in the region of the spacer lugs (7) and is then connected by point-to-point joining to the first component (1).

7. A method according to one of the preceding claims, **characterized in that** the first and the second component (2, 3) are provided in the region of the spacer lugs (7) with mutually aligned openings (9, 10) and are then connected to each other by point-to-point joining.

8. A method according to claim 7, **characterized in that** the second component (2) and the first component (1) are provided with the openings (9, 10) in one single operating step.

9. A method according to claim 8, **characterized in that** that the profile component (2) and the first component (1) are provided on the second tool in a single punching or drilling operating step with the mutually aligned openings (9, 10).

10. A method according to one of the preceding claims, **characterized in that** bolting (8) or riveting elements are used as joining elements.

11. A method according to one of the preceding claims, **characterized in that** components which are made of different metals are used as the two components (1, 2).

12. A method according to claim 11, **characterized in that** the one of the components (1) to be glued together consists of light metal or a light metal alloy and the other one of the components (2) of steel.

13. A method according to claim 11, **characterized in that** the two components (1, 2) to be glued together consist of light metal or steel.

## Revendications

1. Procédé destiné à lier par collage un premier composant (1) en métal avec un second composant (2), composant profilé (2) en métal, le premier composant étant un noeud d'assemblage (1) en métal coulé et le second composant un tube (2) en métal encerclant par segments ce composant, **caractérisé par le fait qu'**au moins un des composants (1, 2) est muni de pattes d'écartement (7) et que les deux composants (1, 2) à coller l'un avec l'autre sont assemblés dans la zone des pattes d'écartement (7) pendant ou avant le collage et sont ainsi fixés l'un à l'autre dans un écartement défini.

2. Procédé selon la revendication 1 **caractérisé par le fait que** les deux composants (1, 2) à coller sont fixés ponctuellement l'un à l'autre pendant ou avant le collage dans la zone des pattes d'écartement (7).

3. Procédé selon la revendication 1 ou 2 **caractérisé par le fait que** les pattes d'écartement (7) ont une forme épousant la courbure.

4. Procédé selon la revendication 1, 2 ou 3 **caractérisé par le fait qu'**avec les pattes d'écartement (7) est aménagé entre les composants (1, 2) à coller l'un avec l'autre un espace annulaire (5) dans lequel la colle (6) est ou sera introduite.

5. Procédé selon la revendication 4 **caractérisé par le fait que** le second composant, en particulier le composant profilé (2), est appliqué par l'un de ses bouts à un premier outil (11) et qui présente des creux (12) dans la zone desquels les pattes d'écartement (7) sont estampées par au moins un ou plusieurs poinçons (13).

6. Procédé selon l'une des revendications précédentes **caractérisé par le fait que** seul le second composant (2) est pourvu dans la zone des pattes d'écartement (7) d'ouvertures (9) se correspondant et qu'il est ponctuellement assemblé avec le premier composant (1).

7. Procédé selon l'une des revendications précédentes **caractérisé par le fait que** le premier et le second composant (2, 3) sont munis dans la zone des pattes d'écartement (7) d'ouvertures (9, 10) se correspondant et sont ainsi ponctuellement reliés à ces endroits.

8. Procédé selon la revendication 7 **caractérisé par le fait que** dans le second composant (2) et le premier composant (1) des ouvertures (9, 10) sont pratiquées en une seule opération.

9. Procédé selon la revendication 8 **caractérisé par le fait que** dans le composé profilé (2) et le composé (1) sur le deuxième outil sont pratiquées des ouvertures (9, 10) se correspondant en une seule opération d'estampage ou de perçage.

10. Procédé selon l'une des revendications précédentes **caractérisé par le fait que** pour les éléments d'assemblage on utilise des éléments à visser (8) ou à river.

11. Procédé selon l'une des revendications précédentes **caractérisé par le fait que** pour les deux composants (1, 2) on utilise des métaux différents.

12. Procédé selon la revendication 11 **caractérisé par le fait qu'**un des composants (1) à coller avec l'autre est en métal léger ou en alliage léger et que l'autre composant (2) est en acier.

13. Procédé selon la revendication 11 **caractérisé par le fait que** les deux composants (1, 2) à coller l'un avec l'autre sont en métal léger ou en acier.
